# EUROPÄISCHE PATENTSCHRIFT

(11) **EP 1 717 089 B1**
(45) Veröffentlichungstag und Bekanntmachung des Hinweises auf die Patenterteilung: **02.04.2008**
(21) Anmeldenummer: 06007658.5
(22) Anmeldetag: 12.04.2006
(51) Int. Cl.: B60K 17/02, F02N 11/00, F02N 15/02

(54) **Vorrichtung zur kuppelbaren Verbindung der Schwungscheibe eines Antriebsmotors mit einer Abtriebswelle**
Apparatus for couplable connection of the flywheel of a drive motor to a drive shaft
Dispositif de couplage entre le volant d'un moteur et un arbre de transmission

(30) Priorität: 27.04.2005 DE 102005019505
(43) Veröffentlichungstag der Anmeldung: 02.11.2006
(73) Patentinhaber: ZF FRIEDRICHSHAFEN AG, 88046 Friedrichshafen (DE)
(72) Erfinder: Osterroth, Sven-Martin, 97337 Dettelbach (DE)

(56) Entgegenhaltungen:
- DE-A1- 10 343 400
- US-A- 4 280 608
- US-A- 4 495 905

## Beschreibung

Die Erfindung betrifft eine Vorrichtung zur kuppelbaren Verbindung der Schwungscheibe eines Antriebsmotors, insbesondere eines Verbrennungsmotors, mit einer Abtriebswelle, insbesondere einer Getriebewelle, mittels einer Kupplungseinrichtung, insbesondere einer Kraftfahrzeugkupplungseinrichtung, wobei die Schwungscheibe zumindest zeitweise mit einem Zahnkranz in Drehverbindung steht und wobei der Zahnkranz mit einem Startermotor in Verbindung steht.

Zum Anlassen eines Verbrennungsmotors ist ein Startermotor erforderlich, der meist über einen Zahnkranz auf die Schwungscheibe des Verbrennungsmotors wirkt. Bei Betätigung des Startermotors wird über die Schwungscheibe die Kurbelwelle des Motors gedreht, bis der Motor läuft.

Aus der DE 30 46 612 A1 ist eine Kupplungsvorrichtung bekannt, bei der die Schwungscheibe und die Kurbelwelle des Verbrennungsmotors mittels eines sperrbaren Freilaufs verbunden sind. Dadurch kann im Schubbetrieb des Fahrzeugs die Drehverbindung zwischen Kurbelwelle und Schwungscheibe unterbrochen werden, während durch die Freilaufsperre im Zugbetrieb die Drehverbindung wieder herstellbar ist.

Ein weiterer wesentlichen Stand der Technik ist durch DE 103 43 400 A1 gegeben.

In manchen Anwendungsfällen ist es erforderlich oder zumindest wünschenswert, dass die Drehmasse des Motors so gering wie möglich gehalten wird. Als Beispiel sei der Rennsport genannt, bei den regelmäßig eine geringe Drehmasse im Antriebsstrang angestrebt wird, um eine hohe Dynamik des Fahrzeugs zu erreichen. Für diese Anwendungsfälle sind spezielle Kupplungsvorrichtungen bekannt, die sich durch einen relativ kleinen Bauraum auszeichnen.

Probleme ergeben sich, wenn eine solche spezielle (Renn-)Kupplungsvorrichtung an sonst typische Serienbauteile angeschlossen werden soll. Namentlich ist es wünschenswert, dass serienmäßige Startermotoren weiterhin verwendet werden können, die auf einen Zahnkranz mit einem relativ großen Durchmesser wirken. Die Beibehaltung eines großen Zahnkranzes ist auch unter dem Aspekt sinnvoll, dass dann ein relativ schwacher und leichter Startermotor verwendet werden kann, der dennoch ein hinreichendes Antriebsdrehmoment an der Schwungscheibe erzeugen kann.

Dadurch ist jedoch zumeist die Drehmasse des Systems relativ groß, was die Dynamik des Verbrennungsmotors bzw. des ganzen Antriebsstranges negativ beeinflusst.

Der Erfindung liegt daher die **Aufgabe** zugrunde, eine Vorrichtung der eingangs genannten Art so weiterzubilden, dass im Betrieb des Motors eine möglichst geringe Drehmasse vorliegt. Dennoch soll ein Zahnkranz üblichen - großen - Durchmessers zur Anwendung kommen, wie er serienmäßig verwendet wird, um einen leichten Startermotor bei hinreichendem Starterdrehmoment einsetzen zu können. Weiterhin soll ein Konzept vorgeschlagen werden, das mit möglichst wenigen sich im Betrieb des Verbrennungsmotors drehenden Bauteilen auskommt.

Die **Lösung** dieser Aufgabe durch die Erfindung ist dadurch gekennzeichnet, dass zwischen dem Zahnkranz und der Schwungscheibe ein Freilauf angeordnet ist und dass die Lagerung des Zahnkranzes relativ zur Schwungscheibe mit einem Lager erfolgt, dessen Innenring direkt oder indirekt mit dem ortsfesten Teil eines Ausrückelements zur Erzeugung eines axialen Verschiebeweges verbunden ist und dessen Außenring direkt oder indirekt mit dem Zahnkranz verbunden ist.

Zudem ist vorgesehen, dass der Freilauf auf einem zylindrischen Sitzabschnitt eines Flansches angeordnet ist, der an dem Gehäuse der Kupplungseinrichtung festgelegt oder mit diesem einstückig ausgeführt ist, wobei das Gehäuse der Kupplungseinrichtung mit der Schwungscheibe drehfest verbunden ist.

Mit dieser Ausgestaltung wird erreicht, dass der Zahnkranz und namentlich dessen radial außerhalb des Freilaufs liegende Drehmasse nach dem Starten des Motors mittels des Startermotors von der Schwungscheibe entkoppelt ist und anhalten kann, so dass durch den Zahnkranz die Drehmasse des Motors nicht erhöht wird. Weiterhin ist es möglich, einen serienmäßigen Zahnkranz auch im Falle der Verwendung einer für den Rennsport ausgebildeten Kupplungsvorrichtung einzusetzen, ohne Nachteile hierdurch hinnehmen zu müssen. Ein weiterer Vorteil der vorgeschlagenen Konzeption besteht darin, dass das den Zahnkranz abstützende Lager im entkoppelten Zustand bei laufendem Motor nicht dreht.

Der Freilauf und das Lager können an dem von der Schwungscheibe abgewandten Ende der Kupplungseinrichtung angeordnet sein. Der Freilauf kann dabei axial näher an der Schwungscheibe angeordnet sein als das Lager.

Mit Vorteil ist der Innenring des Lagers auf der radial außenliegenden zylindrischen Fläche einer Hülse angeordnet, die mit einer radial innenliegenden zylindrischen Fläche an einer radial außenliegenden Fläche des ortsfesten Teils des Ausrückelements angeordnet ist. Die Hülse kann - zwecks Gewichtsersparnis - mindestens eine Ausnehmung aufweisen, die zwischen der radial außenliegenden und der radial innenliegenden Fläche der Hülse an einer definierten Umfangsstelle angeordnet ist. Der Innenring des Lagers kann relativ zu der Hülse axial gesichert werden. Die axiale Sicherung kann dabei mittels mindestens eines Sicherungsrings erfolgen, der in eine Nut in der Hülse eingesetzt ist.

Der Zahnkranz ist vorzugsweise auf einem Trägerelement angeordnet, wobei das Trägerelement einen ersten axial verlaufenden Abschnitt mit zylindrischer Bohrung zur Aufnahme des Außenrings des Freilaufs aufweisen kann. Das Trägerelement weist dabei bevorzugt auch einen zweiten axial verlaufenden Abschnitt mit zylindrischer Bohrung zur Aufnahme des Außenrings des Lagers auf. Eine bevorzugte Ausführungsform sieht dabei vor, dass der erste axial verlaufende Abschnitt auf einem kleineren Durchmesser liegt als der zweite axial verlaufende Abschnitt.

Das vorgeschlagene Konzept ermöglicht - wie -erläutert - eine Integration serienmäßiger Teile bei der Verwendung spezieller Komponenten für den Rennsport. Dabei kommt den Größenverhältnissen eine gewisse Bedeutung zu. Bevorzugt ist daher vorgesehen, dass der Freilauf auf einem Durchmesser angeordnet ist, der höchstens 60 %, vorzugsweise höchstens 40 %, des Durchmessers beträgt, auf dem sich der Zahneingriff des Zahnkranzes befindet. Unter Durchmesser des Freilaufs ist der mittlere Durchmesser zu verstehen, auf dem sich die Sperrkörper befinden. Unter Durchmesser des Zahnkranzes ist der Teilkreis der Verzahnung zu verstehen, die am Umfang des Zahnkranzes angeordnet ist, um einem Ritzel des Startermotors den Eingriff zu ermöglichen.

Entsprechend ist bevorzugt vorgesehen, das Lager auf einem Durchmesser angeordnet ist, der höchstens 70 %, vorzugsweise höchstens 55 %, des Durchmessers beträgt, auf dem sich der Zahneingriff des Zahnkranzes befindet. Unter Durchmesser des Lagers ist der Durchmesser der Mitte der Wälzkörper im Falle eines Wälzlagers zu verstehen.

Weiterhin ist eine besonders kompakte Ausgestaltung möglich, wenn vorgesehen wird, dass der Freilauf auf einem Durchmesser angeordnet ist, der höchstens 70 %, vorzugsweise höchstens 60 %, des äußeren Durchmessers des Gehäuses der Kupplungseinrichtung beträgt.

Schließlich ist eine insbesondere in axialer Richtung sehr kompakte Bauform möglich, wenn das Ausrückelement einen zum ortsfesten Teil axial verschieblichen Kolben aufweist, wobei der Freilauf auf einem Durchmesser angeordnet ist, der größer ist als der äußere Durchmesser des Kolbens. Dabei ist bevorzugt das der Schwungscheibe zugewandte Ende des axial verschieblichen Kolbens axial etwa in Höhe des Freilaufs angeordnet.

Bevorzugt kommt danach für die Kupplungsbetätigung ein sog. Zentralausrücker zum Einsatz. Dabei ist ein am von der Schwungscheibe abgewandten Ende der Kupplungseinrichtung angeordnetes Ausrückelement (Zentralausrücker) zur Erzeugung eines axialen Verschiebeweges angeordnet. Durch diese Ausgestaltung kann eine besonders kompakte Bauweise erreicht werden, die platzsparend ist.

Das Lager ist vorzugsweise ein Wälzlager, wobei insbesondere an ein Rillenkugellager gedacht ist. Der Freilauf ist bevorzugt als Klemmkörperfreilauf ausgebildet.

Der Flansch, der den zylindrischen Sitz für den Freilauf und das Lager aufweist, besteht bevorzugt aus Aluminium, Stahl oder einer Titanlegierung. Der Sitzabschnitt des Flansches ist bevorzugt mit einer Hartschicht versehen, die insbesondere aus Aluminiumoxid oder Titannitrid besteht, wobei eine weitere erfindungsgemäße Möglichkeit vorsieht, hier durch Flammschockspritzen eine karbidhaltige Schicht als sehr harte, und anschließend geglättete Oberfläche aufzuspritzen. Alternativ kann hier auch eine Randschichthärtung, insbesondere bei Verwendung von Stahl als Werkstoff für den Flansch, wie zum Beispiel Einsatzhärten, Bohrieren oder Nitrieren vorgesehen sein. Auch ist eine induktive Randschichthärtung vorteilhaft. Eine weitere erfindungsgemäße Ausgestaltung sieht vor, dass die Hartschicht mittels PhysicalVapourDeposition -Verfahren oder ChemicalVapourDeposition-Verfahren aufgebracht wird. Durch diese vorgenannten Beschichtung lassen sich harte und verschleißarme Schichten erzeugen. Auch das den Zahnkranz tragende Trägerelement besteht vorzugsweise aus Aluminium, Stahl oder einer Titanlegierung.

Mit dem vorgeschlagenen Konzept ist es möglich, für den Rennsport optimierte Kupplungskomponenten - mit relativ kleinen Durchmessern - einzusetzen, ohne auf den serienmäßigen Zahnkranz und Startermotor verzichten zu müssen. Diese können vielmehr in vorteilhafter Weise weiter verwendet werden, da durch den großen Zahnkranzdurchmesser ein leichter Startermotor verwendet werden kann, mit dem dennoch ein großes Anlassdrehmoment erzeugt werden kann.

Durch das Abkoppeln des Zahnkranzes über den Freilauf bei entsprechender Drehzahl des Motors ist die Drehmasse durch den großen Zahnkranz jedoch nicht erhöht, sondern verringert, was der Dynamik des Motors und des gesamten Antriebsstranges zugute kommt.

Die vorgeschlagene Konzeption kommt darüber hinaus mit relativ geringem axialen Bauraum aus, so dass die Vorrichtung insgesamt klein baut.

Vor besonderem Vorteil ist ferner, dass das das Trägerelement samt Zahnkranz lagernde Lager nach dem Entkoppeln von der Schwungscheibe vollständig in Ruhe verharrt, d. h. auch dessen Innenring rotiert dann nicht.

Wenngleich für Anwendungen im Rennsport bevorzugt eingesetzt, kann der Erfindungsvorschlag für beliebige Vorrichtungen der gattungsgemäßen Art eingesetzt werden.

In der Zeichnung ist ein Ausführungsbeispiel der Erfindung dargestellt. Es zeigen:
- Fig. 1: die Ansicht einer Vorrichtung zur kuppelbaren Verbindung der Schwungscheibe eines Verbrennungsmotors mit einer Getriebewelle in Achsrichtung betrachtet (Ansicht "B" gemäß Fig. 2),
- Fig. 2: den Schnitt A-A gemäß Fig. 1 und

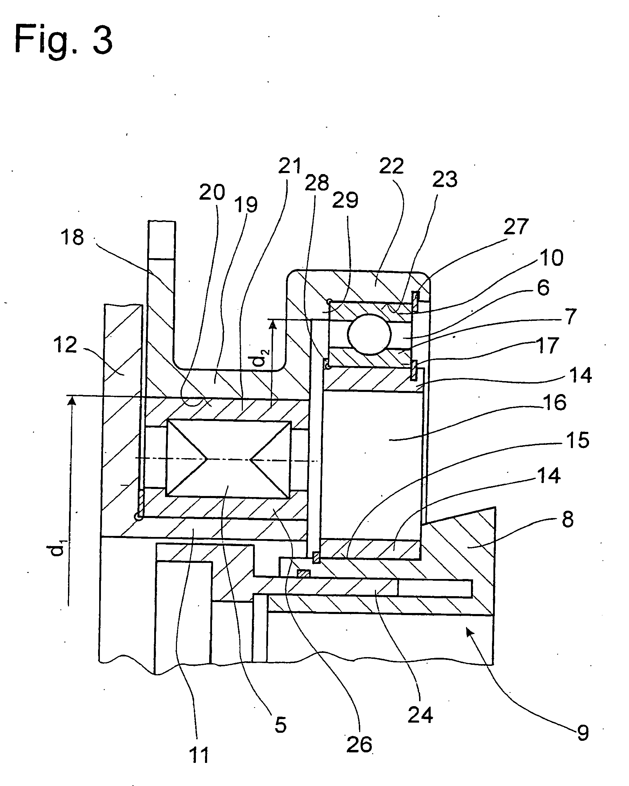

- Fig. 3: eine vergrößerte Ansicht der Vorrichtung als Ausschnitt aus Fig. 2, wobei der Freilauf und das Lager zu erkennen sind.

In den Figuren ist eine Vorrichtung zur kuppelbaren Verbindung der Schwungscheibe 1 eines Verbrennungsmotors mit einer - nicht dargestellten - Getriebewelle skizziert, wobei hierfür eine Kupplungseinrichtung 2 zum Einsatz kommt. Die Schwungscheibe 1 steht mit einem Zahnkranz 3 in Drehverbindung steht; der Zahnkranz 3 wiederum wird von einem Startermotor 4 angetrieben. Von dem Verbrennungsmotor ist neben der Schwungscheibe 1 nur das Motorgehäuse 25 schematisch dargestellt.

Die Kupplungseinrichtung 2 ist als kompakt aufgebaute Vorrichtung konzipiert, wie sie im Rennsport Verwendung findet. Beispielhaft ist hier das RCS-Baukastensystem zu nennen ("Racing Clutch System" aus dem Hause der Anmelderin), das Komponenten mit relativ kleinem Außendurchmesser aufweist und dennoch hohe Leistungen übertragen kann. Der zum Einsatz kommende Zahnkranz 3 entspricht indes üblichen Serienteilen, d. h. er hat einen relativ großen Durchmesser (Teilungsdurchmesser der Verzahnung am Außendurchmesser des Zahnkranzes d₄).

Die Kupplungseinrichtung 2 hat ein Gehäuse 13, das im wesentlichen einen Außendurchmesser d₆ aufweist. Das Gehäuse steht an dem der Schwungscheibe 1 zugewandten axialen Ende mit dieser drehfest in Verbindung. Auf der der Schwungscheibe 1 abgewandten Endseite des Gehäuses 13 ist ein Flansch 12 angeordnet, d. h. dieser ist an das Gehäuse 13 angeschraubt und mittels geeigneter Passelemente zu diesem zentriert. Der Flansch 12 hat radial nach innen versetzt einen zylindrischen Sitzabschnitt 11. Dieser dient zur Aufnahme des Innenrings 26 eines Klemmkörperfreilaufs 5.

Der Zahnkranz 3 wird von einem Trägerelement 18 getragen - der Zahnkranz 3 ist an dem Trägerelement 18 angeschraubt -, wobei das Trägerelement 18 in seinem radial inneren Bereich zwei axial verlaufende Abschnitte aufweist, die jeweils eine zylindrische Bohrung aufweisen, nämlich einen ersten axial verlaufenden Abschnitt 19 mit einer Bohrung 20, der einen Innendurchmesser d₁ aufweist, und einen -zweiten axial verlaufenden Abschnitt 22 mit einer Bohrung 23, die einen Innendruchmesser d₂ hat.

Der erste axial verlaufende Abschnitt 19 nimmt den Außenring 21 des Freilaufs 5 auf. In die Bohrung 23 des zweiten axial verlaufenden Abschnitts 22 ist der Außenring 10 des Lagers 6 eingesetzt. Während im Ausführungsbeispiel schematisch vorgesehen ist, dass sowohl der Außenring 21 als auch der Innenring 26 des Freilaufs mittels geeignetem Presssitz in der Bohrung 20 bzw. auf dem Sitzabschnitt 11 positioniert sind, um eine axiale Bewegung zu verhindern, sind für die axiale Festlegung der Lagerringe 7 und 10 Sicherungsringe 17 bzw. 27 vorgesehen, die im Zusammenwirken mit seitlichen Anlagen 28 und 29 sicherstellen, dass beide Lagerringe 7 und 10 axial fixiert sind, so dass das als Rillenkugellager ausgebildete Lager 6 das Trägerelement 18 und damit den Zahnkranz 3 radial und axial lagert.

Hierzu liegt der Innenring 7 des Lagers 6 auf einer Hülse 14 fest, die mit ihrem radial innenliegenden Bereich wiederum auf dem ortsfesten Teil 8 eines Ausrückelements 9 für die Kupplungsbetätigung axial unverschieblich angeordnet ist.

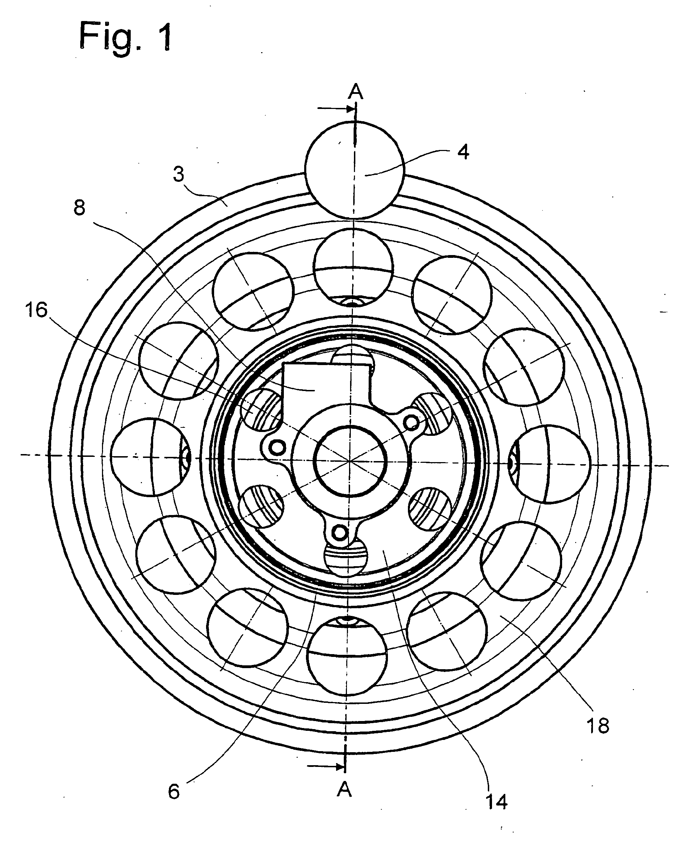

Das Ausrückelement 9 zur Betätigung der Kupplungseinrichtung 2 ist vorliegend eine Einheit, die einen Ausrücker, einen Nehmerzylinder und eine Führungshülse inkorporiert. Diese auch als CSC (Concentric Slave Cylinder) bekannte Einheit weist den axial festen Zylinder 8 auf, in dem ein axial verschieblicher Kolben 24 geführt ist. Zur Aufnahme der Hülse 14 weist der Zylinder 8 eine radial außenliegende Fläche 15 auf. Zur Gewichtsreduzierung ist die Hülse 14 über ihren Umfang mit einer Anzahl Ausnehmungen 16 versehen, wie es am besten in Fig. 1 zu sehen ist.

Der Außendurchmesser d₇ des Ausrückelements 9 und namentlich dessen Kolben 24 ist geringer als der Durchmesser d₃ des Freilaufs 5 und des diesen tragenden Sitzabschnitts 11. Dies hat zur Folge, dass der Kolben 24 axial unter den Freilauf 5 tauchen kann, was eine besonders kompakte Bauweise erlaubt.

Sowohl der Freilauf 5 als auch das Lager 6 weisen Durchmesser d₃ bzw. d₅ auf, die wesentlich kleiner sind als der Durchmesser d₄ des Zahnkranzes 3. Im Ausführungsbeispiel beträgt der Durchmesser d₃, auf dem der Freilauf 5 liegt, lediglich ca. 35 % des Durchmessers d₄ des Zahnkranzes 3; der Durchmesser d₅, auf dem das Lager 6 liegt, beträgt ca. 50 % des Durchmessers d₄ des Zahnkranzes 3.

Auch im Verhältnis zum Außendurchmesser d₆ des Gehäuses 13 der Kupplungseinrichtung 2 ist der Durchmesser d₃ des Freilaufs 5 bzw. des Durchmessers d₅ des Lagers 6 relativ gering; im Ausführungsbeispiel liegen diese Durchmesser bei ca. 55 % bzw. ca. 80 % des Außendurchmessers d₆ des Gehäuses 13.

Nach dem Starten des Motors mittels des Startermotors 4 - insbesondere im Rennsporteinsatz - wird der Anlasserzahnkranz 3 nicht mehr benötigt. In vorbekannten Konstruktionen wird er jedoch bei jedem Hochdrehen des Verbrennungsmotors mit drehbeschleunigt, da er zumeist drehfest mit der Schwungscheibe 1 bzw. der Kupplungseinrichtung 2 verbunden ist. Dies bedeutet eine unnötig mitbeschleunigte Drehmasse, die der Motordrehbeschleunigung entgegenwirkt.

Durch die Entkopplung des Anlasserzahnkranzes 3 von der Schwungscheibe 1 über den erfindungsgemäß vorgesehenen Freilauf 5 nach dem Startvorgang kann die drehzubeschleunigende Masse reduziert werden, was die Dynamik des Motors verbessert.

Beim Starten des Verbrennungsmotors übt der Startermotor 4 durch Eingriff seines - nicht dargestellten - Ritzels in den Zahnkranz 3 eine Drehbewegung aus, die über das Trägerelement 18 und den noch gesperrten Freilauf 5 auf den-zylindrischen Sitzabschnitt 11 und den Flansch 12 und das Gehäuse 13 und schließlich auf die Schwungscheibe 1 übertragen wird. Hierdurch wird der Verbrennungsmotor angelassen.

Ist der Verbrennungsmotor gestartet, koppelt der Freilauf 5 nach Überschreiten der Überholdrehzahl der Kurbelwelle den Starterzahnkranz 3 samt Trägerelement 18 von der Kupplungseinrichtung 2 ab. Durch den ständigen Eingriff des Ritzels des Startermotors 4 in den Zahnkranz 3 und durch das dem Startermotor 4 innewohnende Schleppmoment bei dessen Nicht-Antreiben wird der Zahnkranz 3 und damit auch das Trägerelement 18 bei laufendem Verbrennungsmotor im Ruhezustand gehalten, d. h. die genannten Elemente rotieren nicht.

Dies hat auch Vorteile bei einem Schnellstart bzw. nach dem "Abwürgen" des Motors, weil der Anlasserdrehkranz dann nicht erst noch weiterdreht und das eingreifende Ritzel des Startermotors belastet bzw. beschädigt.

Hierdurch wird die drehzubeschleunigende Masse gering gehalten, so dass die Dynamik des Verbrennungsmotors hoch ist.

Da der Innenring 7 des Lagers 6 über die Hülse 14 auf dem ortsfesten Zylinder 8 des Ausrückelements 9 gelagert ist, kommt nach dem Entkoppeln des Zahnkranzes 3 auch das Lager 6 komplett zur Ruhe, d. h. weder Außenring 10 noch Innenring 7 rotieren. Auch dadurch wird also die drehzubeschleunigende Masse weiter reduziert.

Der Zahnkranz 3 wird durch das Rillenkugellager 6 sowohl radial als auch axial geführt, sobald der Freilauf 5 die Abhebedrehzahl seiner Klemmkörper erreicht hat, was bei ca. 600 U/min der Fall ist. Oberhalb der Abhebedrehzahl der Klemmkörper besteht also keine Drehverbindung mehr zwischen dem zylindrischen Sitzabschnitt 11 und dem Abschnitt 19.

Durch das schnelle Erreichen der Leerlaufdrehzahl wird der Freilauf 5 nur gering belastet, so dass eine besondere Vorkehrung für dessen Versorgung mit Schmiermittel nicht nötig ist. Es ist insbesondere keine gekapselte Schmierung des Freilaufs 5 erforderlich; es genügt eine einmalige Besprühung des Freilaufs bzw. seiner Klemmkörper mit Haftöl. Der Freilauf läuft also trocken oder (einmalig) fettgeschmiert, jedenfalls ist kein Ölbad erforderlich.

Aufgrund der Ausbildung des Freilaufs 5 als Klemmkörperfreilauf (nicht als Rollenfreilauf) ergibt sich eine vollständige Unterbrechung der Drehkopplung ab Überholdrehzahl, so dass der Zahnkranz 3 vollständig zum Stillstand kommen kann. D. h. ab der Abhebedrehzahl der Klemmkörper des Freilaufs 5 gelangen die Klemmkörper außer Eingriff.

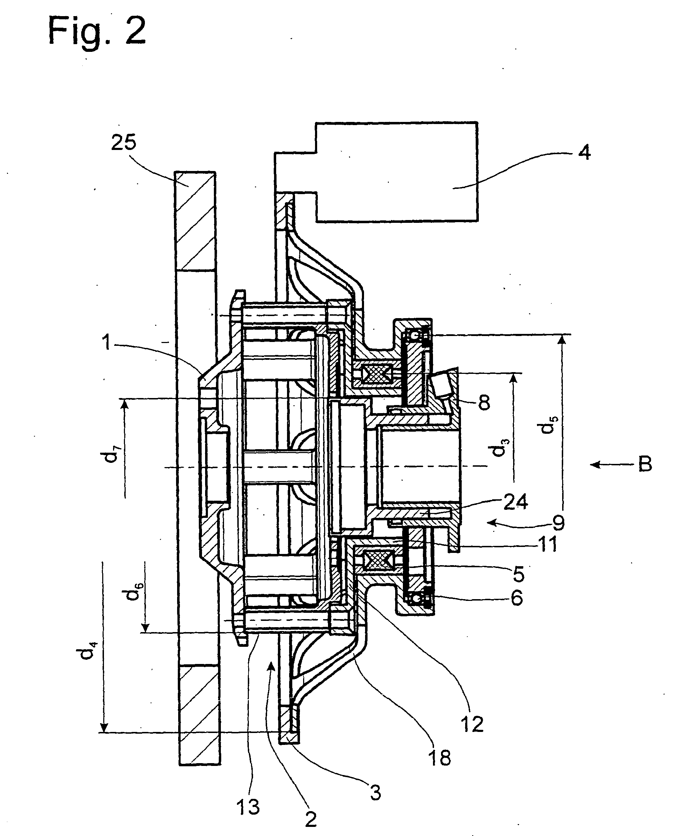

Wie in Fig. 2 zu sehen ist, ist das Ausrücksystem 9 in axialer Richtung gesehen weitgehend innerhalb der axialen Erstreckung des Freilaufs 5 bzw. des Lagers 6 angeordnet, so dass sich in axiale Richtung eine sehr kompakte Bauform ergibt.

Der große Außendurchmesser des Zahnkranzes 3 ermöglicht die Verwendung eines leichten und kleinen Startermotors, da dieser über den großen Durchmesser d₄ ein hinreichendes Drehmoment für das Anlassen des Verbrennungsmotors aufbauen kann.

Im Ausführungsbeispiel sind das Gehäuse 13 der Kupplungseinrichtung 2 und der Flansch 12 zweiteilig ausgebildet. Es kann aber auch vorgesehen sein, dass es sich hierum ein einziges Teil handelt, was die Zentrierung / Anschraubung des Flansches 12 am Gehäuse 13 entbehrlich macht.

### Bezugszeichenliste

- 1: Schwungscheibe
- 2: Kupplungseinrichtung
- 3: Zahnkranz
- 4: Startermotor
- 5: Freilauf
- 6: Lager
- 7: Innenring
- 8: ortsfester Teil des Ausrückelements (Zylinder)
- 9: Ausrückelement
- 10: Außenring
- 11: zylindrischer Sitzabschnitt
- 12: Flansch
- 13: Gehäuse
- 14: Hülse
- 15: radial außenliegende Fläche
- 16: Ausnehmung
- 17: Sicherungsring
- 18: Trägerelement
- 19: erster axial verlaufender Abschnitt
- 20: Bohrung
- 21: Außenring des Freilaufs
- 22: zweiter axial verlaufender Abschnitt
- 23: Bohrung
- 24: Kolben
- 25: Motorengehäuse
- 26: Innenring des Freilaufs
- 27: Sicherungsring
- 28: Anlage
- 29: Anlage

- d₁: Durchmesser
- d₂: Durchmesser
- d₃: Durchmesser
- d₄: Durchmesser
- d₅: Durchmesser
- d₆: Durchmesser
- d₇: Durchmesser

## Patentansprüche

1. Vorrichtung zur kuppelbaren Verbindung der Schwungscheibe (1) eines Antriebsmotors, insbesondere eines Verbrennungsmotors, mit einer Abtriebswelle, insbesondere einer Getriebewelle, mittels einer Kupplungseinrichtung (2), insbesondere einer Kraftfahrzeugkupplungseinrichtung, wobei die Schwungscheibe (1) zumindest zeitweise mit einem Zahnkranz (3) in Drehverbindung steht und wobei der Zahnkranz (3) mit einem Startermotor (4) in Verbindung steht, wobei
zwischen dem Zahnkranz (3) und der Schwungscheibe (1) ein Freilauf (5) angeordnet ist und dass die Lagerung des Zahnkranzes (3) relativ zur Schwungscheibe (1) mit einem Lager (6) erfolgt, dessen einer Ring, insbesondere dessen Innenring (7), direkt oder indirekt mit dem ortsfesten Teil (8) eines Ausrückelements (9) zur Erzeugung eines axialen Verschiebeweges verbunden ist und dessen anderer Ring, insbesondere dessen Außenring (10), direkt oder indirekt mit dem Zahnkranz (3) verbunden ist **dadurch gekennzeichnet, dass** der Freilauf (5) auf einem zylindrischen Sitzabschnitt (11) eines Flansches (12) angeordnet ist, der an dem Gehäuse (13) der Kupplungseinrichtung (2) festgelegt oder mit diesem einstückig ausgeführt ist, wobei das Gehäuse (13) der Kupplungseinrichtung (2) mit der Schwungscheibe (1) drehfest verbunden ist.

2. Vorrichtung nach Anspruch 1, **dadurch gekennzeichnet, dass** der Freilauf (5) und das Lager (6) an dem von der Schwungscheibe (1) abgewandten Ende der Kupplungseinrichtung (2) angeordnet sind.

3. Vorrichtung nach Anspruch 2, **dadurch gekennzeichnet, dass** der Freilauf (5) axial näher an der Schwungscheibe (1) angeordnet ist als das Lager (6).

4. Vorrichtung nach einem der Ansprüche 1 bis 3, **dadurch gekennzeichnet, dass** der Innenring (7) des Lagers (6) auf der radial außenliegenden zylindrischen Fläche einer Hülse (14) angeordnet ist, die mit einer radial innenliegenden zylindrischen Fläche an einer radial außenliegenden Fläche (15) des ortsfesten Teils (8) des Ausrückelements (9) angeordnet ist.

5. Vorrichtung nach Anspruch 4, **dadurch gekennzeichnet, dass** die Hülse (14) mindestens eine Ausnehmung (16) aufweist, die zwischen der radial außenliegenden und der radial innenliegenden Fläche der Hülse an einer definierten Umfangsstelle angeordnet ist.

6. Vorrichtung nach Anspruch 4 oder 5, **dadurch gekennzeichnet, dass** der Innenring (7) des Lagers (6) relativ zu der Hülse (14) axial gesichert ist.

7. Vorrichtung nach Anspruch 6, **dadurch gekennzeichnet, dass** die axiale Sicherung mittels mindestens eines Sicherungsrings (17) erfolgt, der in eine Nut in der Hülse (14) eingesetzt ist.

8. Vorrichtung nach einem der Ansprüche 1 bis 7, **dadurch gekennzeichnet, dass** der Zahnkranz (3) auf einem Trägerelement (18) angeordnet ist, wobei das Trägerelement (18) einen ersten axial verlaufenden Abschnitt (19) mit zylindrischer Bohrung (20) zur Aufnahme des Außenrings (21) des Freilaufs (5) aufweist.

9. Vorrichtung nach Anspruch 8, **dadurch gekennzeichnet, dass** das Trägerelement (18) einen zweiten axial verlaufenden Abschnitt (22) mit zylindrischer Bohrung (23) zur Aufnahme des Außenrings (10) des Lagers (6) aufweist.

10. Vorrichtung nach Anspruch 7 und 8, **dadurch gekennzeichnet, dass** der erste axial verlaufende Abschnitt (19) auf einem kleineren Durchmesser (d₁) liegt als der zweite axial verlaufende Abschnitt (22).

11. Vorrichtung nach einem der Ansprüche 1 bis 10, **dadurch gekennzeichnet, dass** der Freilauf (5) auf einem Durchmesser (d₃) angeordnet ist, der höchstens 60 %, vorzugsweise höchstens 40 %, des Durchmessers (d₄) beträgt, auf dem sich der Zahneingriff des Zahnkranzes (3) befindet.

12. Vorrichtung nach einem der Ansprüche 1 bis 11, **dadurch gekennzeichnet, dass** das Lager (6) auf einem Durchmesser (d₅) angeordnet ist, der höchstens 70 %, vorzugsweise höchstens 55 %, des Durchmessers (d₄) beträgt, auf dem sich der Zahneingriff des Zahnkranzes (3) befindet.

13. Vorrichtung nach einem der Ansprüche 1 bis 12, **dadurch gekennzeichnet, dass** der Freilauf (5) auf einem Durchmesser (d₃) angeordnet ist, der höchstens 70 %, vorzugsweise höchstens 60 %, des äußeren Durchmessers (d₆) des Gehäuses (13) der Kupplungseinrichtung (2) beträgt.

14. Vorrichtung nach einem der Ansprüche 1 bis 13, **dadurch gekennzeichnet, dass** das Ausrückelement (9) einen zum ortsfesten Teil (8) axial verschieblichen Kolben (24) aufweist, wobei der Freilauf (5) auf einem Durchmesser (d₃) angeordnet ist, der größer ist als der äußere Durchmesser (d₇) des Kolbens (24).

15. Vorrichtung nach Anspruch 14, **dadurch gekennzeichnet, dass** das der Schwungscheibe (1) zugewandte Ende des axial verschieblichen Kolbens (24) axial etwa in Höhe des Freilaufs (5) angeordnet ist.

16. Vorrichtung nach einem der Ansprüche 1 bis 15, **dadurch gekennzeichnet, dass** das Lager (6) ein Wälzlager ist.

17. Vorrichtung nach Anspruch 16, **dadurch gekennzeichnet, dass** das Lager (6) ein Rillenkugellager ist.

18. Vorrichtung nach einem der Ansprüche 1 bis 17, **dadurch gekennzeichnet, dass** der Freilauf (5) ein Klemmkörperfreilauf ist.

19. Vorrichtung nach einem der Ansprüche 1 bis 18, **dadurch gekennzeichnet, dass** der Flansch (12) aus Aluminium oder Stahl besteht.

20. Vorrichtung nach einem der Ansprüche 1 bis 19, **dadurch gekennzeichnet, dass** der Sitzabschnitt (11) des Flansches (12) mit einer Hartschicht versehen ist, insbesondere aus Aluminiumoxid, Titannitrid oder Stahl.

21. Vorrichtung nach einem der Ansprüche 9 bis 20, **dadurch gekennzeichnet, dass** das den Zahnkranz (3) tragende Trägerelement (18) aus Aluminium, Stahl oder einer Titanlegierung besteht.

## Claims

1. Apparatus for the couplable connection of the flywheel (1) of a drive motor/engine, in particular an internal combustion engine, to an output shaft, in particular a transmission shaft, by means of a clutch device (2), in particular a motor-vehicle clutch device, the flywheel (1) being rotationally connected to a crown gear (3) at least temporarily and the crown gear (3) being connected to a starter motor (4), a freewheel (5) being arranged between the crown gear (3) and the flywheel (1) and the crown gear (3) being mounted relative to the flywheel (1) by way of a bearing (6), one ring of which, in particular the inner ring (7) of which, is connected directly or indirectly to the stationary part (8) of a disengagement element (9) in order to produce an axial displacement path, and the other ring of which, in particular the outer ring (10) of which, is connected directly or indirectly to the crown gear (3), **characterized in that** the freewheel (5) is arranged on a cylindrical seat section (11) of a flange (12) which is fixed to the housing (13) of the clutch device (2) or is of integral configuration with the said housing (13), the housing (13) of the clutch device (2) being connected fixedly in terms of rotation to the flywheel (1).

2. Apparatus according to Claim 1, **characterized in that** the freewheel (5) and the bearing (6) are arranged at that end of the clutch device (2) which faces away from the flywheel (1).

3. Apparatus according to Claim 2, **characterized in that** the freewheel (5) is arranged axially nearer to the flywheel (1) than the bearing (6).

4. Apparatus according to one of Claims 1 to 3, **characterized in that** the inner ring (7) of the bearing (6) is arranged on the radially outer cylindrical face of a sleeve (14) which is arranged with a radially inner cylindrical face on a radially outer face (15) of the stationary part (8) of the disengagement element (9) .

5. Apparatus according to Claim 4, **characterized in that** the sleeve (14) has at least one recess (16) which is arranged between the radially outer and the radially inner face of the sleeve at a defined circumferential point.

6. Apparatus according to Claim 4 or 5, **characterized in that** the inner ring (7) of the bearing (6) is secured axially relative to the sleeve (14).

7. Apparatus according to Claim 6, **characterized in that** the axial securing takes place by means of at least one securing ring (17) which is inserted into a groove in the sleeve (14).

8. Apparatus according to one of Claims 1 to 7, **characterized in that** the crown gear (3) is arranged on a carrier element (18), the carrier element (18) having a first axially extending section (19) with a cylindrical hole (20) for receiving the outer ring (21) of the freewheel (5) .

9. Apparatus according to Claim 8, **characterized in that** the carrier element (18) has a second axially extending section (22) with a cylindrical hole (23) for receiving the outer ring (10) of the bearing (6).

10. Apparatus according to Claims 7 and 8, **characterized in that** the first axially extending section (19) lies on a smaller diameter (d₁) than the second axially extending section (22).

11. Apparatus according to one of Claims 1 to 10, **characterized in that** the freewheel (5) lies on a diameter (d₃) which is at most 60%, preferably at most 40%, of the diameter (d₄), on which the tooth engagement of the crown gear (3) is situated.

12. Apparatus according to one of Claims 1 to 11, **characterized in that** the bearing (6) is arranged on a diameter (d₅) which is at most 70%, preferably at most 55%, of the diameter (d₄), on which the tooth engagement of the crown gear (3) is situated.

13. Apparatus according to one of Claims 1 to 12, **characterized in that** the freewheel (5) is arranged on a diameter (d₃) which is at most 70%, preferably at most 60%, of the outer diameter (d₆) of the housing (13) of the clutch device (2).

14. Apparatus according to one of Claims 1 to 13, **characterized in that** the disengagement element (9) has a piston (24) which can be displaced axially with respect to the stationary part (8), the freewheel (5) being arranged on a diameter (d₃) which is greater than the outer diameter (d₇) of the piston (24).

15. Apparatus according to Claim 14, **characterized in that that** end of the axially displaceable piston (24) which faces the flywheel (1) is arranged axially approximately at the level of the freewheel (5).

16. Apparatus according to one of Claims 1 to 15, **characterized in that** the bearing (6) is a roller bearing.

17. Apparatus according to Claim 16, **characterized in that** the bearing (6) is a groove ball bearing.

18. Apparatus according to one of Claims 1 to 17, **characterized in that** the freewheel (5) is a clamping-body freewheel.

19. Apparatus according to one of Claims 1 to 18, **characterized in that** the flange (12) is composed of aluminium or steel.

20. Apparatus according to one of Claims 1 to 19, **characterized in that** the seat section (11) of the flange (12) is provided with a hard layer, in particular of aluminium oxide, titanium nitride or steel.

21. Apparatus according to one of Claims 9 to 20, **characterized in that** the carrier element (18) which carries the crown gear (3) is composed of aluminium, steel or a titanium alloy.

## Revendications

1. Dispositif pour la connexion accouplable du disque volant (1) d'un moteur d'entraînement, notamment d'un moteur à combustion interne, comprenant un arbre de sortie, notamment un arbre de transmission, au moyen d'un dispositif d'accouplement (2), notamment d'un dispositif d'accouplement de véhicule automobile, le disque volant (1) étant en liaison rotative au moins temporairement avec une couronne dentée (3) et la couronne dentée (3) étant en liaison avec un moteur de démarreur (4),
une roue libre (5) étant disposée entre la couronne dentée (3) et le disque volant (1) et le support de la couronne dentée (3) par rapport au disque volant (1) s'effectuant avec un palier (6), dont une bague, notamment la bague interne (7), est connectée directement ou indirectement à la partie fixe (8) d'un élément de débrayage (9) pour produire une course de déplacement axiale et dont l'autre bague, notamment la bague externe (10), est connectée directement ou indirectement à la couronne dentée (3), **caractérisé en ce que** la roue libre (5) est disposée sur une portion de siège cylindrique (11) d'une bride (12), qui est fixée au boîtier (13) du dispositif d'accouplement (2) ou qui est réalisée d'une seule pièce avec lui, le boîtier (13) du dispositif d'accouplement (2) étant connecté de manière solidaire en rotation au disque volant (1).

2. Dispositif selon la revendication 1, **caractérisé en ce que** la roue libre (5) et le palier (6) sont disposés sur l'extrémité du dispositif d'accouplement (2) opposée au disque volant (1).

3. Dispositif selon la revendication 2, **caractérisé en ce que** la roue libre (5) est disposée axialement plus près du disque volant (1) que le palier (6).

4. Dispositif selon l'une quelconque des revendications 1 à 3, **caractérisé en ce que** la bague interne (7) du palier (6) est disposée sur la surface cylindrique radialement externe d'une douille (14) qui est disposée avec une surface cylindrique radialement interne contre une surface radialement externe (15) de la partie fixe (8) de l'élément de débrayage (9).

5. Dispositif selon la revendication 4, **caractérisé en ce que** la douille (14) présente au moins un évidement (16) qui est disposé entre la surface radialement externe et la surface radialement interne de la douille sur un point défini de la périphérie.

6. Dispositif selon la revendication 4 ou 5, **caractérisé en ce que** la bague interne (7) du palier (6) est fixée axialement par rapport à la douille (14).

7. Dispositif selon la revendication 6, **caractérisé en ce que** la fixation axiale s'effectue au moyen d'au moins une bague de fixation (17), qui est insérée dans une rainure dans la douille (14).

8. Dispositif selon l'une quelconque des revendications 1 à 7, **caractérisé en ce que** la couronne dentée (3) est disposée sur un élément de support (18), l'élément de support (18) présentant une première portion (19) s'étendant axialement avec un alésage cylindrique (20) pour recevoir la bague externe (21) de la roue libre (5).

9. Dispositif selon la revendication 8, **caractérisé en ce que** l'élément de support (18) présente une deuxième portion (22) s'étendant axialement avec un alésage cylindrique (23) pour recevoir la bague externe (10) du palier (6).

10. Dispositif selon les revendications 7 et 8, **caractérisé en ce que** la première portion (19) s'étendant axialement se situe sur un plus petit diamètre (d₁) que la deuxième portion (22) s'étendant axialement.

11. Dispositif selon l'une quelconque des revendications 1 à 10, **caractérisé en ce que** la roue libre (5) est disposée sur un diamètre (d₃) qui vaut au maximum 60%, de préférence au maximum 40%, du diamètre (d₄) sur lequel se trouve l'engagement des dents de la couronne dentée (3).

12. Dispositif selon l'une quelconque des revendications 1 à 11, **caractérisé en ce que** le palier (6) est disposé sur un diamètre (d₅) qui vaut au maximum 70%, de préférence au maximum 55%, du diamètre (d₄) sur lequel se trouve l'engagement des dents de la couronne dentée (3).

13. Dispositif selon l'une quelconque des revendications 1 à 12, **caractérisé en ce que** la roue libre (5) est disposée sur un diamètre (d₃) qui vaut au maximum 70%, de préférence au maximum 60%, du diamètre extérieur (d₆) du boîtier (13) du dispositif d'accouplement (2).

14. Dispositif selon l'une quelconque des revendications 1 à 13, **caractérisé en ce que** l'élément de débrayage (9) présente un piston (24) déplaçable axialement par rapport à la partie fixe (8), la roue libre (5) étant disposée sur un diamètre (d₃) qui est supérieur au diamètre extérieur (d₇) du piston (24).

15. Dispositif selon la revendication 14, **caractérisé en ce que** l'extrémité du piston déplaçable axialement (24) tournée vers le disque volant (1) est disposée axialement approximativement à la hauteur de la roue libre (5).

16. Dispositif selon l'une quelconque des revendications 1 à 15, **caractérisé en ce que** le palier (6) est un palier à roulement.

17. Dispositif selon la revendication 16, **caractérisé en ce que** le palier (6) est un roulement rainure à billes.

18. Dispositif selon l'une quelconque des revendications 1 à 14, **caractérisé en ce que** la roue libre (5) est une roue libre à corps de serrage.

19. Dispositif selon l'une quelconque des revendications 1 à 18, **caractérisé en ce que** la bride (12) se compose d'aluminium ou d'acier.

20. Dispositif selon l'une quelconque des revendications 1 à 19, **caractérisé en ce que** la portion de siège (11) de la bride (12) est pourvue d'une couche dure, notamment en oxyde d'aluminium, en nitrure de titane ou en acier.

21. Dispositif selon l'une quelconque des revendications 9 à 20, **caractérisé en ce que** l'élément de support (18) portant la roue dentée (3) se compose d'aluminium, d'acier ou d'un alliage de titane.
